# EUROPEAN PATENT APPLICATION

(11) **EP 4 435 591 A1**
(43) Date of publication of application: **25.09.2024**
(21) Application number: 23162889.2
(22) Date of filing: 20.03.2023
(51) Int. Cl.: G06F 9/38, G06F 9/50, G06F 15/173

(54) **COMPUTING SYSTEM FOR MIXED PRECISION PROCESSING OF A COMPUTATIONAL TASK AND METHOD THEREOF**

(71) Applicant: BF exaQC AG, 82031 Grünwald (DE)
(72) Inventor: Frohwitter, Bernhard, 81679 München (DE)
(74) Representative: Himmelsbach, Mathias

(57) **Abstract**

The present invention relates to a computing system for mixed precision processing of a computational task. Particularly, the computing system comprising a plurality of first computing elements configured to perform arithmetic calculations with a first precision, one or more second computing elements configured to perform arithmetic calculations with a second precision, and a communication infrastructure, wherein the plurality of first computing elements, and the one or more second computing elements are communicatively connected to the communication infrastructure, and wherein the second precision is different from the first precision. This proposed system has the advantage that corresponding parts of the computational task can be executed by the respective suitable computing elements in a particularly resource-saving manner.

## Description

The present invention relates to a computing system for mixed precision processing of a computational task and method thereof.

Supercomputers are evolving in rapid steps towards modular systems. This was first described in WO 2012/049247 A1. This is due to the need to deal efficiently with the increasing complexity of applications, but also the urgent need to reduce energy consumption. Such systems may consist of several different modules, each of which solves certain aspects of a complex application in the sense of functional parallelism operating as optimally as possible in terms of speed, energy consumption or other requirements.

Double-precision floating-point arithmetic (FP64) has been the de facto standard in the context of technical and scientific simulations for several decades. However, since quite some time computer scientists and numerical mathematicians have been studying the use of numerical formats with less than 64-bit floating point precision. They are motivated by several reasons: for example, in recent years, the power requirements in high-performance computing have increased extremely with increasing system performance and have reached a dimension where OPEX equals CAPEX for a system's lifetime. Furthermore, the cost of data storage has increased rapidly with increasing system size. Third, execution times of applications have risen sharply with increasing problem sizes, a phenomenon due to computational capabilities of the machines lagging the algorithmic demands posed by increasing system sizes. Good reviews of these developments, e.g., with respect to Deep Neural Nets (DNNs) and linear algebra applications are found in 'Train with Mixed Precision', User's Guide, NVIDIA Docs (DA-08617-001_v001, February 2023) and Azzam Haidar et al., 'Mixed-precision iterative refinement using tensor cores on GPUs to accelerate solution of linear systems', 25 November 2020 (doi.org/10.1098/rspa.2020.0110).

The use of number formats with 32, 16, 8, 4 or even 2 bits can have enormous advantages: On the one hand, data with lower precision require less memory and thus, in principle, allow the handling of larger computational problems, a prominent example being the training of large neural networks. Second, these formats require less memory bandwidth, which allows to speed up data transfer, this mainly benefits bandwidth-limited problems, which are most of the large-scale computational problems treated today. A common algorithmic challenge in this respect is the repeated multiplication of a large matrix with a vector that appears within an iterative solver. And furthermore, mathematical operations can be computed much faster and with lower power consumption at lower precision.

In the field of mixed precision computing, methods have been found which ensure that task-specific accuracies are not lost compared to high precision computing. This is achieved by identifying exactly those steps that require a large precision; only for these steps, for example, 64-bit floating point numbers are then used, while 16-bit floating point numbers might suffice for all other steps. An illustrative example is the matrix-vector multiplication mentioned.

The present invention is defined by the independent claims. Particularly, it provides a computing system for mixed precision processing of a computational task. The computing system comprises a plurality of first computing elements configured to perform arithmetic calculations with a first precision, one or more second computing elements configured to perform arithmetic calculations with a second precision, and a communication infrastructure, wherein the plurality of first computing elements, and the one or more second computing elements are communicatively connected to the communication infrastructure, and wherein the second precision is different from the first precision.

The present invention includes aspects of both the Modular Supercomputing Architecture (MSA) and the concept of Mixed Precision Arithmetic (MPA).

For this purpose, a cluster system with computing elements (CE) that can represent high precision - this is usually 64-bit arithmetic - is assigned the part of the computational task that must be executed with high precision. This is usually in the field of MPA only a small part of the operations to be performed. In terms of MSA, one will execute by far the largest part of the computations on the booster, where, advantageously, one would choose CEs that can only execute low precision. However, these CEs will compute much faster, with less memory and communication requirements, and thus lower power requirements than the high-precision CEs on the cluster.

An important feature of MSA is its ability to dynamically assign and alter resources on the booster by request of a resource manager, triggered from the code through execution of suitable directives. This advantageously extends this ability towards the level of precision to be used in an optimal manner. This can be realized by a monitoring function (MF) in the code.

One dynamical realization is to balance the execution between the cluster's high-precision CEs and the booster's low-precision CEs. Then the MF determines if higher precision is required during the actual computation and moves the execution from booster CEs to cluster CEs. If low precision is advantageous, then the computation is transferred, correspondingly, from the cluster CEs to the booster CEs.

Another important dynamical realization is given in the case of more than one booster, each equipped with CEs of a different precision. For the sake of clarity, the following example is provided: A cluster is equipped with CEs of 64-bit precision, further, there are 5 boosters available tightly connected to the cluster on a joint network, with one booster equipped with CEs with 32-bit precision, the second booster with 16 bit precision, the third with 8 bit precision, one with 4 bit precision and one with 2 bit precision.

In this case the dynamical realization has the freedom to transfer the computational load with respect to the optimization criteria between any of the boosters, as well as the cluster. This allows for cascaded hierarchical execution of MPAs, a field actively under development. The case of 2-bit precision could be relevant for quadratic unconstrained binary optimization problems, so-called QUBOs, arising in the field of discrete optimization, which is advantageously used in calculations regarding quantum annealing and/or quantum computing (in the context of the QAOA algorithm).

Another field of application of the MSA are modern highly evolved chip architectures consisting of complex cores for complex, e.g., recursive computing tasks, and cores trimmed for highest computing performance. In all modern chip architectures after 2020, all these are dynamically assigned to each other. In fact, it is advantageous to apply the principles as presented here to CEs consisting of two types of cores, one type computing with high precision, the other type with low precision. The on-chip controller takes over the task of the resource manager. In addition, the different core sets can operate with different cache principles, allowing the low precision core to operate without cache for highest streaming I/O.

The computing system for mixed precision processing of a computational task as described herein advantageously comprises a plurality of first computing elements configured to perform arithmetic calculations with a first precision, one or more second computing elements configured to perform arithmetic calculations with a second precision, and a communication infrastructure, such as Gigabit Ethernet, InfiniBand, Omni-Path, Mellanox HDR, Slingshot-10 or any custom interconnect or proprietary network.

The plurality of first computing elements and the one or more second computing elements are communicatively connected to the communication infrastructure. This provides the advantage that the first computing elements and the second computing elements can freely be assigned to each other to perform parts of a computation task. Being communicatively connected to the communication infrastructure shall also include a scenario, in which the first computing elements are connected to a separate internal communication infrastructure, which itself is connected, possibly via a communications interface, to the communication infrastructure. This is particularly advantageous, in a set-up in which the plurality of the first computing elements forms a cluster or are formed by specific cores of a computer processor, such as a system-on-chip. The communication interface may also provide adaptation of the protocol of the internal communication infrastructure to another protocol used by the communication infrastructure. Correspondingly, also with reference to the second computing elements, or any group of computing elements, being communicatively connected to the communication infrastructure shall also include a scenario in which the second computing elements, or any group of computing elements are connected by their own communication infrastructure and wherein their own communication infrastructure is, possibly via a respective communications interface, connected to the communication infrastructure.

A computational task can be defined by an algorithm, a source code or a binary code and can also consist of a combination of these elements. For example, a computational task can be a simulation to be computed by the computer cluster array, or the training of an Al (artificial intelligence) model, such as a DNN or a Transformer, such as GPT (Open Al). Furthermore, the computational task may consist of several sub-problems, referred to as parts of the computational task, which in their entirety describe the entire computational task. It is possible to divide the computing task into several parts, for example into at least a first part of the computational task and at least a second part of the computational task. It is also possible for the computing system to solve the parts of the computational task in parallel or sequentially. Some parts of the computational task may also be suitable for parallel computation and might advantageously processed by a specifically adapted processing element, such as a GPU. Alternatively, or additionally, parts can be formed depending on the required precision to be used for arithmetic operations.

Preferably, the plurality of first computing elements is configured to perform arithmetic computations with a first precision, can only operate with that exact arithmetic precision. This has the advantage that the respective hardware can be optimized for exactly that arithmetic precision. This allows the components to be more energy and cost efficient. The same may apply for any computing element in the proposed computing system.

Currently, it is proposed to divide the calculation task into parts according to their requirements for the precision of the calculation to be applied to individual parts. There might for example be a part that requires double precision floating point operation and others which allow for half precision floating point operation. This is advantageous if different computing elements are configured to provide different precision for the arithmetic calculation as presently suggested.

In addition, parts can also be formed depending on whether the individual part is suitable for parallelization or not. Such parts that can be parallelized can then preferably be processed on computing elements that are optimized for parallel processing. This proves particularly useful when the one or more second computing elements have a different architecture compared to the plurality of first computing elements and are optimized for parallel processing. Preferably, the computing system comprises one or more third computing elements configured to perform arithmetic calculations with a third precision, wherein the third precision is different from the second precision. If the second computing elements have single precision (FP32) for arithmetic operations, it might be advantageous for the third computing elements to have double precision (FP64). If the first computing elements are also set up for double precision (FP64), i.e., for the same precision as the third computing elements, then both the first and the third computing elements are available for processing the corresponding parts of the computing task that require this precision. This is particularly advantageous if the third computing elements have a different architecture compared to the first computing elements, for example if they are optimized for parallel computing. In this case, if the computational task can be parallelized, the third computing elements optimized for parallel processing are particularly suited to handle the processing of this part of the computational task.

Let us assume the case that the arithmetic task contains a first part to be processed with the first precision and a second part to be processed with the second precision. In this case, the respective parts of the arithmetic task must be assigned to the corresponding arithmetic elements configured to perform the required precision for the arithmetic operations. For this purpose, the computing system further comprises a management entity. The management entity is configured to assign a part that has a specific arithmetic precision requirement to the corresponding arithmetic element for processing. In the case mentioned above, the management entity would assign the first portion of the computational task to one or more of the plurality of first computing elements and the second portion of the computational task to one of the one or more second computing elements.

Let us now assume that the third precision is equal to the first precision. This means that, considering the required precision, either the first or the third computing elements are suitable for processing a task that requires the first precision. In this case, it is not the required precision that matters, but which computing element is particularly suitable for processing that part of the computational task at that point in time.

Other criteria may now play a role in deciding which computing element is used. For example, if the first part of the computational task can benefit from parallel processing and the first computing element is not optimized for parallel processing, unlike the third computing element, the management entity assigns the first part of the computational task to one of the one or more third computing elements.

Advantageously, the management entity is configured to dynamically assign the different parts of the computational task to one of the computing elements based on the respective precision requirements and the expected performance of the task on the respective computing element. Furthermore, the management entity is configured to assign different parts of the computational task to one of the computing elements based on additional criteria such as energy consumption, priority, availability, latency, available bandwidth, and occupancy. Said criteria may result in an assignment where a part of the computational task is computed by a computing element with a higher precision than required. This may be the case if the computing element with the required precision is occupied by another process or part of the computation task, has a long queue, is currently unavailable, or the result of the part of the compuation task is needed as an intermediate result for further part of the computation task. This has the advantage that the use of the available resources can be further optimized.

Preferably, the management entity is also configured to dynamically change the assignment when one of the criteria changes and the expected benefit of another assignment is above a predetermined threshold. Advantageously, the management entity receives information about the new allocation and or the change of any of the criteria and or the updated task requirements from one or more components from a group of components, the group including: a resource manager, an operating system, policies in program code, a monitoring function, an on-chip controller, a sensor, such as a temperature sensor or an energy consumption sensor, or a background task.

Advantageously, for each part of a computational task, an indication is provided regarding the required precision and or whether the part of a computational task benefits from parallel processing, e.g., whether it is suggested to have the part of a computational task processed by a GPU, FPU, FPGA, ASIC, neural processing unit, tensor processing unit, parallel processor, or the like. This kind of indication could be provided by directives in the source code of the computational task, which act in the compiled or interpreted code as a kind of switch to indicate what hardware is preferably used to process the part of a computational task, e.g., depending on the floating-point precision or parallel computing capability.

The resource manager could also take into consideration whether the part of a computational task belongs to an application running in the foreground of background of a multi-tasking operating system.

Regarding the management entity, the term assignment or assign, may include an allocation of resources, virtually connecting two or more computing elements, creating a shared memory space to which the two or more computing elements can access, reserving one or more computing elements for one or more other computing elements, it may further include, an indication to one computing unit, which other computing unit could be used to outsource a part of the computational task.

Besides the management entity, there is advantageously provided a resource manager. The resource manager can be realized in software and or hardware, such as an application program and or background task, or as a combination of hardware and or firmware. The resource manager can be seen as the decision-making entity, which determines which computing element is used to process a particular part of the computational task, whereas the management entity can be seen as the performing entity, which executes what the resource manager has determined. The management entity may also inform the resource manager about those criteria that relate to the computing nodes with which the management entity is communicating. It is also envisaged that the resource manager and the management entity can be combined into one single entity fulfilling the functionality of both.

The management entity could be realized in software or hardware. A software realization could be advantageous in a cluster-booster setup. In such a setup, the management entity could be realized as an application program and or background task running on one or more selected computing elements or cluster nodes or as an application program and or background task running on each of the computing elements or cluster nodes. Correspondingly, respective functionality may be provided as part of the boosters. In the cluster-booster setup, a resource manager could be implemented as part of the management entity or as a separate application program and or background task. The resource manager can be seen as the decision-making entity, which determines which computing element is used to process a particular part of the computational task, whereas the management entity can be seen as the performing entity, which executes what the resource manager has determined. The management entity may also inform the resource manager about those criteria that relate to the computing nodes with which the management entity is communicating.

A realization of the management entity in hardware and or firmware could be advantageous for a scenario in which the present invention is realized in a computer chip or system on chip. In such a scenario, the resource manager could be realized as part of an operating system used in an arrangement in which the computing system is included. In such a case, the management entity is preferably configured to conveys information about those criteria that relate to the computing nodes with which the management entity is communicating to the resource manager in the operating system and is further configured to receive from the resource manager instructions regarding computing elements and or an assignment of computing elements to each other as described above. The management entity itself could be realized as an on-chip controller in communication with the various computing elements or as a plurality of on-chip controllers, each assigned to a particular computing element on the system on chip.

Advantageously, a monitoring function is provided to observe for at least a portion of the parts of the computational task what arithmetic precision is needed and or whether there is a benefit for that parts of the computational to be processed in parallel. Such a monitoring function could be implemented as part of the application program indicating to the resource manager the respective requirements, such as the required floating-point precision. Additionally, or alternatively, the monitoring function could be implemented as part of the management entity and or the resource manager. The monitoring function could observe the used range of floating point values and or the overflow or underflow of arithmetic operations and indicate using a different floating point format.

Preferably, the plurality of first computing elements comprises at least one group of components, the group comprising: a processing node, a multi-core processor, a general-purpose central processing unit, a scalar processor, a multi-scalar processor, a processor core, a system-on-chip, a computer, a workstation.

The one or more second computing elements comprise at least one of a group of components, the group comprising: GPU (Graphics Processing Unit), FPU (Floating Point Unit), FPGA (Field Programmable Gate Array), ASIC (application-specific integrated circuit), neural processing unit, tensor processing unit.

Preferably, the arithmetic calculations are floating-point arithmetic and each of the first, second and third precisions can be one of a group of precisions, the group comprising: FP128, FP64, FP32, bfloat16, FP8, TensorFloat format. In computing, floating-point arithmetic (FP) is arithmetic that represents real numbers approximately, using an integer with a fixed precision, called the significand or mantissa, scaled by an integer exponent of a fixed base.

FP128 is a floating-point format according to IEEE 754, referred to as quadruple-precision binary floating-point format using 128 bits. FP64 is a 64-bit floating point, referring to the IEEE 754 double-precision binary floating-point format. FP32 is a 32-bit format according to IEEE 754. FP16 is the IEEE 754 half-precision floating-point format. Bfloat16 is another 16-bit format providing dynamic range identical to that of FP32. TensorFloat-32, or TF32, is the new math mode in NVIDIA A100 GPUs.

In a preferred embodiment, the computing system is a modular supercomputer, and the plurality of first computing elements form a computing cluster. In such a configuration, the second computing elements form a first booster, and the third computing elements form another booster, whereas the first booster and the second booster have different precisions regarding arithmetic operations they perform.

In another preferred embodiment, the computing system is a computer processor or system-on-chip, characterized in that the plurality of first computing elements operate with different cache principles than the one or more second computing elements. Caching works on the principle of locality of reference. Locality of reference refers to the tendency of a processor to access the same memory locations when executing an application. Since these memory accesses are predictable, they can be exploited through caching. In the present embodiment, it may be advantageous for the core, which operates at low precision, to operate without caching for highest streaming I/O.

The present invention may also be implemented as a method for mixed precision processing of a computational task, the computing system comprising a plurality of first computing elements configured to perform arithmetic calculations with a first precision, one or more second computing elements configured to perform arithmetic calculations with a second precision, a communication infrastructure, and a management entity, wherein the plurality of first computing elements, and the one or more second computing elements are communicatively connected to the communication infrastructure, wherein the second precision is different from the first precision, wherein the computational task includes a first part, which is determined to be processed using the first precision, and a second part, which is determined to be processed using the second precision, the method comprising the steps:
the management entity assigns the first part of the computational task to one or more of the plurality of first computing elements and the management entity assigns the second part of the computational task to one of the one or more second computing elements.

The proposed architecture is suitable for the execution of various variants of large-scale computations such as simulations and data analytics as well as Al tasks:
Training of deep neural networks. An important application area is the training of DNNs in the field of Artificial Intelligence (Al), which have revolutionized cognitive tasks such as image and speech recognition. They are also called foundational networks. It is well known to experts that training large DNNs is computationally highly intensive, which has spurred the search for computer architectures for this class of applications. The MSA, particularly the cluster booster architecture, would store the synaptic weights in the booster at low-precision (BLP) and thus perform the otherwise expensive weighted summations very effectively. The precise weight update is then performed on the cluster at high precision (CHP), and thus, the training precision of such an implementation is not limited. In other words, the booster unit, which performs relatively inaccurate weighted summations at 4, 8, 16 bits, depending on the requirements of the specific DNN, is combined with a small high-precision digital processing unit at 32 or 64 bits that accumulates the weight updates with high precision.

In the concrete embodiment of a CHP and one or more BLP, the latter embodied with one or more distinct precisions, one can carry out a workflow that monitors the success of the training cycle and dynamically switches the booster computation to the best partition size on the most appropriate booster depending on the chosen optimization criterion, e.g., maximum precision, maximum speed-up, or minimum energy consumption.

In the concrete realization with a booster equipped with CEs of 8-bit precision and a cluster with CEs of 64-bit precision, one might save up to a factor of 3 to 4 for each power of 2, i.e., 8 *×* 2³ = 64 results in a factor of 3³ = 27 to 4³ = 64. If it is possible to go down in the concrete implementation with a booster equipped with CEs of 4-bit precision and a cluster with CEs of 64-bit precision, one can even achieve speedup values between 81 and 256.

Speeding up the solution of linear systems of equations by means of mixed precision. The solution of linear systems of equations is probably the most important application area of large supercomputers today. Corresponding codes can be found in all areas of hydrodynamics, computational fluid dynamics (CFD), simulations of electromagnetic systems, thermodynamic systems, biological systems, engineering or logistic optimization problems, material sciences or simulations in fundamental sciences such as astrophysics, particle physics and gravitational physics, to name just a few.

The art of combining different levels of floating-point precision is a relatively recent development in numerical analysis and has become a new approach in the wake of exponentially increasing complexity of computer applications and massive amounts of data coming from various instruments and sensors.

In the publication of Azzam Haidar et al., this new approach has been applied to various numerical methods for the solution of linear systems of equations *A* · *x = b*, where *A* is a large, dense non-singular *n* × *n* matrix, by means of LU factorization or the preconditioned generalized minimal residual algorithm (GMRES).

The combination of MPA and MSA, as proposed herein, provides the ability to directly apply the principles of mixed-precision linear algebra to hardware.

Many further fields of application of mixed precision computations can be identified in High-Performance Computing such as stochastic algorithms in field theory or solid-state physics, density functional theory, or molecular dynamics for materials sciences and biology.
Figure 1 shows a computing system 100 for mixed precision processing according to the present invention.
Figure 2 shows an embodiment of the present invention, namely a modular supercomputer that follows the cluster booster principle.
Figure 3 shows a block diagram of a cluster booster system according to the invention.
Figure 4 depicts another embodiment of the present invention.

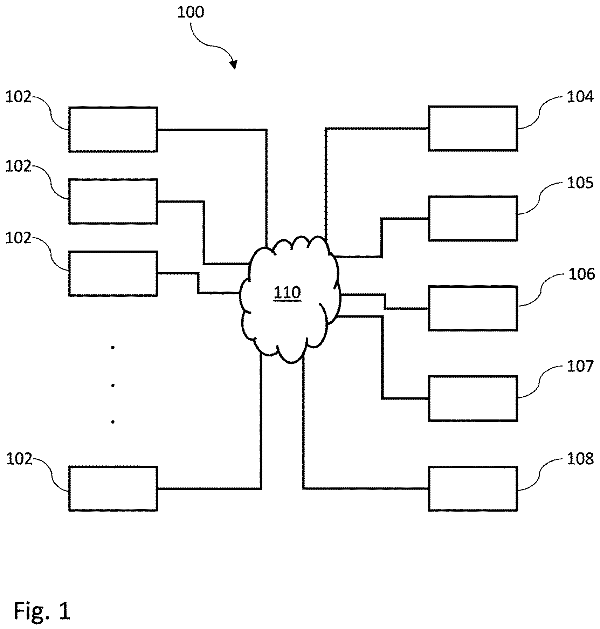

Figure 1 shows a computing system 100 for mixed precision processing according to the present invention having a plurality of first computing elements 102, a second computing element 104, a third computing element 105, a fourth computing element 106, a fifth computing element 107, and a sixth computing element 108. The plurality of first computing elements 102 has an arithmetic precision of 64 bits. The second computing element 104 has an arithmetic precision of 32 bits, the third computing element 105 has an arithmetic precision of 64 bits, the fourth computing element 106 has an arithmetic precision of 16 bits, the fifth computing element 107 has an arithmetic precision of 8 bits, and the sixth computing element 108 has an arithmetic recession of 4 bits.

The plurality of first computing elements 102 is communicatively connected to a communication infrastructure 110. Also communicatively connected to this communication infrastructure 110 are the second, third, fourth, fifth, and sixth Computing Elements 104, 105, 106, 107, 108. In a preferred embodiment, the plurality of first computing elements 102 are formed by CPUs, while the second, third, fourth, fifth, and sixth computing elements 104, 105, 106, 107, 108 are each formed by GPUs having the aforementioned arithmetic precision for processing arithmetic operations.

Because of the interconnection of the different computing elements to the communication infrastructure, there is the possibility that portions of a computational task running primarily on one or more of the plurality of first computing elements 102 may be offloaded to one of the second, third, fourth, fifth, or sixth computing elements 104, 105, 106, 107, 108. Such offloading is preferably performed such that the portion of the computational task to be offloaded is offloaded to the computing element that can perform the arithmetic precision required by the portion of the computational task.

For example, if it is predetermined or detected during operation that a portion of a computational task requires an arithmetic precision of, say, 32 bits, then the second computing element 104 is preferably used to execute that portion of the computational task. If it is predetermined or determined during operation that the portion of the computational task requires a lower or higher arithmetic precision requirement, the portion of the computational task is transferred to another computing element accordingly. Thus, if instead of the previously required arithmetic precision of 32 bits, a precision of only 16 bits or even only eight bits is required instead, then the part of the computational task is transferred to the fourth computing element 106 that works with 16 bit precision or to the fifth computing element 107 that works with 8 bit precision. Likewise, it is possible to transfer a part of a computational task that operates with a lower precision and requires a higher precision during operation to another computing element accordingly, for example from the second computing element 104 that has an arithmetic precision of 32 bits to the third computing element 105 that has a precision of 64 bits.

This has the advantage that always those computing elements are used, which provide exactly that precision for the arithmetic operation, which is needed. This frees up the resources that provide higher precision for other tasks. This enables a resource-saving use of the entire resources and this leads to a saving of costs, because due to the dynamic selection of the suitable resources, expensive resources can be saved and also the energy consumption can be reduced in the operation, because computing elements, which provide a lower precision, typically also have a lower energy consumption, than computing elements, which offer a higher arithmetic precision.

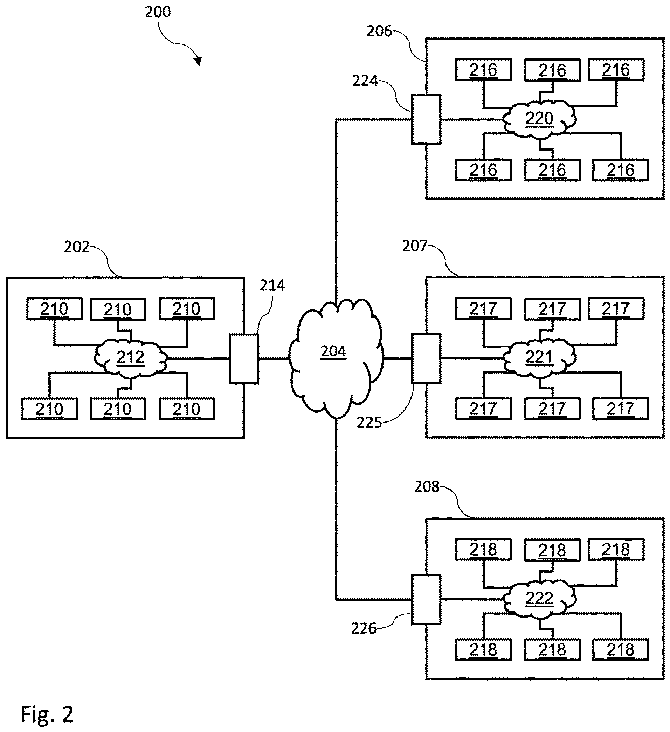

Figure 2 shows an embodiment of the present invention, namely a modular supercomputer 200 that follows the cluster booster principle. This system includes a cluster 202, a communication infrastructure 204, and three booters 206, 207, 208. The cluster comprises six computing elements 210 communicatively connected to an internal communication infrastructure 212. Furthermore, the cluster 202 comprises a communication interface 214 that connects the internal communication infrastructure 212 to the communication infrastructure 204 located between the cluster and the boosters. The individual boosters are structured accordingly, and each comprise a plurality of computing elements 216, 217, 218, six each in the present example. Within a booster, the six computing elements 216, 217, 218 are communicatively connected to an internal communication infrastructure 220, 221, 222 provided within the booster 206, 207, 208. The internal communication infrastructure 220, 221, 222 of the individual boosters is connected to a respective communications interface 224, 225, 226, which in turn is linked to the communication infrastructure 204 disposed between the cluster and the posters.

The individual computing elements 210 of the cluster 202 are formed by cluster nodes, each of which is provided with one or more CPUs, memory, and an input and output unit (not shown). For the internal network 212 of the cluster 202, as well as for the communication infrastructure 204 between the cluster 202 and the boosters 206,207, 208, as well as for the communication infrastructure 220, 221, 222 within the individual boosters 206, 207, 208, network components are particularly suitable, such as Gigabit Ethernet, InfiniBand, Omni-Pass, Melanox, Slingshot or others. The communication interface 214 of the cluster 202 that connects the cluster 202 internal communication infrastructure 212 to the communication infrastructure 204 between the cluster 202 and the boosters 206, 207, 208 can be formed, for example, by a dedicated computing element of the cluster (not shown). Alternatively, it is also possible for one of the computing, elements of the cluster to perform this task. In the case of the boosters 206, 207, 208, it is preferred to provide a communication interface 224, 225, 226 that is different from the computing elements 216, 217, 218 used in each of the boosters 206, 207, 208.

In a preferred embodiment, the computing elements 210 of the cluster 202 have an arithmetic precision of 64 bits. However, it is also possible to provide computing elements 210 with different arithmetic precision within the cluster 202. Preferably, the used boosters 206, 207, 208 have arithmetic precision of different levels. For example, the first booster 206 can have an arithmetic precision of 32 bits, the second booster 207 a precision of 64 bits and the third booster 208 an arithmetic precision of 16 bits. In order that the respective boosters can be designed in a particularly optimal way for their provided arithmetic precision, it is preferably provided that each individual booster 206, 207, 208 has only one single precision for arithmetic operations. This means that in the present example the first booster 206 can operate exclusively with the arithmetic precision of 32 bits, the second booster 207 can operate exclusively with the arithmetic precision of 64 bits and the third booster 208 can operate exclusively with the arithmetic precision of 16 bits.

The functionality of the modular supercomputer 200 described in figure 2 corresponds to the functionality of the computing system 100 described in figure 1. A typical use case is, for example, that a computational task, which is processed in the cluster 202 on one or more computing elements 210, has certain parts that do not require the arithmetic precision provided by the cluster. For example, a portion of the computational task may only have the need for 16 bits of arithmetic precision, so it is appropriate to run that portion on the third booster 208, which has the required 16 bits of precision. In addition to the required arithmetic precision, it also matters in practice whether the part of the computational task to be offloaded can benefit from being executed by parallel processing. In such a case, it may be advantageous to offload a part of the computational task that requires 64-bit arithmetic precision to the second booster that also provides 64-bit arithmetic precision. In this case, the processing of the computational task benefits from the fact that the outsourced part is processed at high speed, in parallel by the second booster 207. The outsourcing of the corresponding parts is done during the operation of the system, automatically and dynamically, based on a variety of criteria. The criteria include the required arithmetic precision and the ability to benefit from parallel processing, as well as several other criteria, such as the amount of expected energy consumption or current energy consumption, a priority of the task, an availability of appropriate booster capacities, a time delay that goes along with the offloading, for example, due to transfer of data, the available bandwidth for the transfer of data, and the current occupancy of each resource, to name just a few examples.

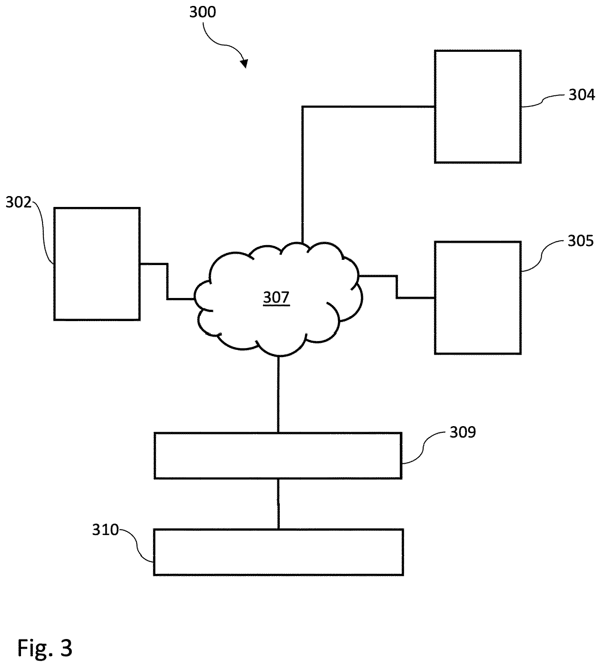

Figure 3 shows a block diagram of a cluster booster system 300 according to the invention with a cluster 302, a first booster 304, a second booster 305 and a communication infrastructure 307 connecting the cluster 302 with the first and second booster 304, 305. Further, a management entity 309 is connected to the communication infrastructure 307. The management entity 309 is in turn communicatively connected to a resource manager 310.

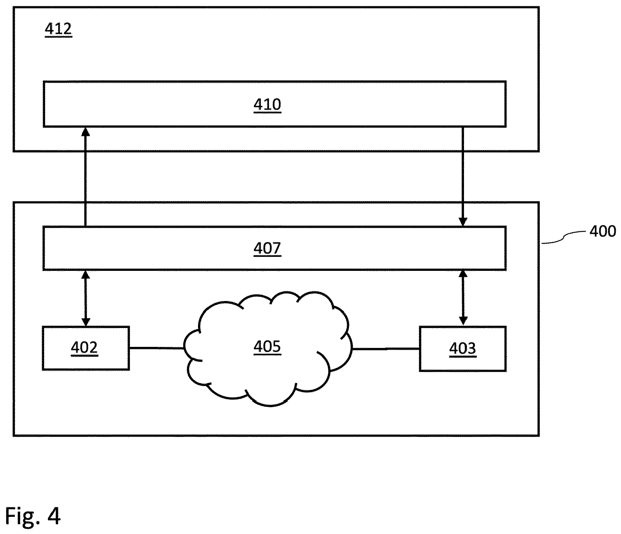

Figure 4 depicts another embodiment of the present invention. In this case, the computing system 400 is implemented as a processor 400, for example a computer chip or system-on-chip. In this case, the processor 400 comprises a first computing element 402, a second computing element 403, and a communication infrastructure 405 interconnecting both computing elements 402, 403. In addition, the processor has a management entity 407 that is communicatively connected to each of the two computing elements shown 402, 403. In the present case, the first computing element 402 has an arithmetic precision of 64 bits, while the second computing element 403 has an arithmetic precision of 32 bits. The processor 400 is further configured to be able to communicate with a resource manager 410 that can be provided during operation as part of an operating system 412, for example Windows or Linux. The management entity 407 can obtain from the individual computing elements 402, 403 information about their operational status and passing this information to the resource manager 410 of the operating system 412. Furthermore, the management entity 407 is set up to receive instructions from the resource manager 400 as to which parts of the computational task are to be assigned to which of the two computing elements 402, 404. The resource manager preferably 410 considers several criteria in determining which part is to be processed on which computing element 402, 403, for example the required precision of the work metric operations, but also others such as power consumption, availability and so on as also mentioned for the embodiment example in figure 3. For simplicity, figure 4 represents only one computing element, the first computing element 402, with precision 64 bits and one computing element, the second computing element 403, with precision 32 bits, but in a real implementation a plurality of one or both computing elements 402, 403 will be provided. Furthermore, it is also advantageous to provide not only computing elements having two different arithmetic precisions, but three or more different ones. This has the advantage that corresponding parts of the computational task can be executed by the respective suitable computing elements in a particularly resource-saving manner.

## Claims

1. A computing system (100) for mixed precision processing of a computational task, the computing system (100) comprising:
a plurality of first computing elements (102) configured to perform arithmetic calculations with a first precision,
one or more second computing elements (104) configured to perform arithmetic calculations with a second precision, and
a communication infrastructure (110),
wherein said plurality of first computing elements (102), and said one or more second computing elements (104) are communicatively connected to said communication infrastructure (110),
wherein said second precision is different from said first precision.

2. The computing system (100) according to any preceding claims, wherein said one or more second computing elements (104) have a different architecture in comparison to said plurality of first computing elements (102) in said one or more second computing elements (104) are optimized for parallel computing.

3. The computing system (100) according to any preceding claims, further comprising one or more third computing elements (105) configured to perform arithmetic calculations with a third precision, wherein said third precision is different from said second precision.

4. The computing system (100) according to claim 3, wherein said one or more third computing elements (105) have a different architecture in comparison to said plurality of first computing elements (102) in said they are optimized for parallel computing.

5. The computing system (100) according to any preceding claims, wherein said computational task includes a first part, which is determined to be processed using said first precision, and a second part, which is determined to be processed using said second precision,
the computing system (100) further comprising a management entity (309),
said management entity (309) is configured to assign said first part of said computational task to one or more of said plurality of first computing elements (102) and
said management entity (309) is further configured to assign said second part of said computational task to one of said one or more second computing elements (104).

6. The computing system (100) according to claims 3 to 5, wherein said third precision is the same as said first precision, and wherein said management entity (309) is configured to assign said first part of said computational task to one of said one or more third computing elements (105), if said first part of said computational task can benefit from parallel computing.

7. The computing system (100) according to claim 5 or 6, wherein said management entity (309) is configured to dynamically assign the different parts of said computational task to any of the computing elements based on their respective precision requirements and the expected performance of the task on the respective computing element (102, 104, 105).

8. The computing system (100) according to claim 7, wherein said management entity (309) is further configured to assign different parts of said computational task to any of the computing elements (102, 104, 105) based on additional criteria such as, energy consumption, priority, availability, latency, available bandwidth, occupancy.

9. The computing system (100) according to claim 8, wherein said management entity (309) is further configured to change the assignment dynamically if any of the criteria change and the expected benefit of a different assignment is above a predetermined threshold.

10. The computing system (100) according to any of the claims 7 to 9, wherein said management entity (309) receives information regarding the new assignments or different criteria and task requirements from one or more of a group of components, said group comprising: a resource manager (310), an operating system, directives in the program code, a monitoring function, an on-chip controller, a sensor, a background task.

11. The computing system (100) according to any preceding claims, wherein said computing system (100) is a modular supercomputer and wherein said plurality of first computing elements (102) form a computing cluster.

12. The computing system (100) according to any preceding claims 1 to 10, wherein said computing system (100) is a computer processor or system-on-chip, **characterized in that** said plurality of first computing elements (102) operate with different cache principles than said one or more second computing elements (104).

13. The computing system (100) according to any preceding claims, wherein said plurality of first computing elements (102) comprise at least one of a group of components, said group comprising: a processing node, a multi-core processor, a general-purpose central processing unit, a scalar processor, a multi-scalar processor, a processor core, a system-on-chip, a computer, a workstation.

14. The computing system (100) according to any preceding claims, wherein said one or more second computing elements (104) comprise at least one of a group of components, said group comprising: GPU, FPU, FPGA, ASIC, neural processing unit, tensor processing unit, parallel processor.

15. The computing system (100) according to any preceding claims, wherein the arithmetic calculations are floating-point arithmetic and each of the first, second and third precisions can be one of a group of precisions, said group comprising: FP128, FP64, FP32, bfloat16, FP8, TensorFloat format.

16. A method for mixed precision processing of a computational task, the computing system (100) comprising a plurality of first computing elements (102) configured to perform arithmetic calculations with a first precision, one or more second computing elements (104) configured to perform arithmetic calculations with a second precision,
a communication infrastructure (110), and a management entity (309), wherein said plurality of first computing elements (102), and said one or more second computing elements (104) are communicatively connected to said communication infrastructure (110), wherein said second precision is different from said first precision, wherein said computational task includes a first part, which is determined to be processed using said first precision, and a second part, which is determined to be processed using said second precision, the method comprising the steps:
said management entity (309) assigns said first part of said computational task to one or more of said plurality of first computing elements (102) and
said management entity (309) assigns said second part of said computational task to one of said one or more second computing elements (104).
